# EUROPÄISCHE PATENTSCHRIFT

(11) **EP 0 271 791 B1**
(45) Veröffentlichungstag und Bekanntmachung des Hinweises auf die Patenterteilung: **03.03.1993**
(21) Anmeldenummer: 87118021.2
(22) Anmeldetag: 05.12.1987
(51) Int. Cl.: C11D 7/34, A01N 41/04, A23L 3/34

(54) **Verwendung kurzkettiger Alkansulfonsäuren in Reinigungs- und Desinfektionsmitteln**
Use of short chain alcanesulfonic acids in cleaning and disinfecting agents
Utilisation d'acides alcanesulfoniques à courte chaîne dans des agents de nettoyage et de désinfection

(30) Priorität: 13.12.1986 DE 3642604
(43) Veröffentlichungstag der Anmeldung: 22.06.1988
(73) Patentinhaber: Henkel Kommanditgesellschaft auf Aktien, 40191 Düsseldorf (DE)
(72) Erfinder: Schlüssler, Hans-Joachim, Dr., D-5657 Haan (DE)

(56) Entgegenhaltungen:
- FR-A- 2 130 877
- GB-A- 1 562 961
- US-A- 4 215 005

## Beschreibung

Die vorliegende Erfindung betrifft die Verwendung von Alkansulfonsäuren in Reinigungs- und/oder Desinfektionsmitteln in der lebensmittelverarbeitenden Industrie.

In der Reinigungs- und Desinfektionstechnik werden zur Zeit überall dort, wo saure Mittel angezeigt sind, Produkte verwendet, die auf Basis Salpetersäure, Schwefelsäure und Phosphorsäure aufgebaut sind. Für spezielle Aufgaben werden auch Mischungen dieser Säuren eingesetzt. Salzsäure und Flußsäure werden nur in einzelnen Fällen verwendet, und zwar überall dort, wo das zu reinigende Material nicht durch Korrosion gefährdet ist.

Für die Reinigungs- und Desinfektions-Technologie im Rahmen der lebensmittelverarbeitenden Industrie sind deshalb nur die erstgenannten drei Mineralsäuren in Gebrauch. Insbesondere die Phosphorsäure zeigt neben ihrer Funktion als Säure auch reinigungsaktive Effekte. Sie wird deshalb im überwiegenden Maße für die Reinigungs- und Desinfektions-Technik angewandt.

Die Aufzählung der sauren Stoffe muß ergänzt werden durch eine Reihe organischer Säuren, insbesondere Amidosulfonsäure, Ameisensäure, zum Teil Essigsäure sowie Zitronensäure. Aufgrund ihrer schwächeren Acidität sind sie jedoch nicht umfassend verwendbar.

Selbstverständlich werden auch die entsprechenden sauren Salze der aufgeführten anorganischen und organischen Säuren verwendet. Phosphorsäure und ihre sauren Salze werden im überwiegenden Maße als Grundlage für saure Reinigungs- und/oder Desinfektionsmittel heute noch verwendet. Die Phosphorsäure bzw. ihre sauren Salze werden kombiniert mit oberflächenaktiven Stoffen, Antischaummitteln, Korrosionsinhibitoren und gegebenenfalls Lösungsvermittlern, ferner speziellen Desinfektionskomponenten, die im Phosphorsäuremilieu stabil und wirksam sind - z.B. quartäre Ammoniumverbindungen, elementares Jod, Wasserstoffperoxid und Perverbindungen.

Diese Kombinationen werden im Temperaturbereich zwischen 5 und 85°C zur Entfernung von Eiweiß, Fett und mineralischen Verschmutzungen eingesetzt, wie sie in den entsprechenden Branchen der lebensmittelverarbeitenden Industrie anfallen. Liegen nur mineralische Verschmutzungen vor, so sind dafür auch Produkte auf Schwefel- und Salpetersäurebasis auf dem Markt. Auch diese können kombiniert werden mit speziellen Desinfektionskomponenten, die in diesem Milieu stabil und wirksam sind.

Durch die in den letzten Jahren immer stärker gewordene Notwendigkeit, nitrat- und allgemein stickstoffhaltige Produkte sowie vor allem Produkte auf Phosphorsäurebasis aus umwelttechnischen Gründen durch andere Säuregrundlagen zu ersetzen, hat eine Reihe von grundlegenden Untersuchungen gezeigt, daß als Ersatz für Salpetersäure, aber vor allem für Phosphorsäure, nur begrenzte Möglichkeiten bestehen. Zur Entfernung von Verschmutzungen, wie beispielsweise Kohlehydrate, Eiweiß, Fette, anorganische Mineralbestandteile und sonstige Reste, kann beispielsweise Schwefelsäure, die als Substitut in Frage kommen könnte, wegen ihres unzureichenden Reinigungseffekts bei organischen Verschmutzungen nicht verwendet werden. Auch ist an Chromnickelstählen und Aluminiumoberflächen vor allem im höheren Temperaturbereich bei 85°C mit starken Korrosionen zu rechnen.

Eine brauchbare Lösung ist die Amidosulfonsäure, die einen guten Reinigungseffekt bei organischen Verschmutzungen besitzt und korrosionstechnisch für Chromnickelstahl und Aluminium akzeptabel ist.

Bei sogenannten Standbädern, d.h. Reinigungsbädern, die zur wiederholten Durchführung des Reinigungs- und/oder Desinfektionsprozesses im überwiegenden Maße eingesetzt werden, kommt es jedoch zur Zersetzung dieser Verbindung. Der Reinigungseffekt wird dann unzureichend, und zusätzlich tritt Korrosion auf. Die im Stand der Technik bekannten organischen Säuren sind in den meisten Fällen, insbesondere bei anorganischen Verschmutzungen, unwirksam (kurzkettige Carbonsäuren bzw. Dicarbonsäuren) oder weisen einen zu starken, beim Reinigungsprozeß störenden Geruch auf (Ameisensäure).

Ullmanns Encyklopädie der technischen Chemie, 4. Auflage, Band 20, Seite 153 ff, beschreibt Reinigungs- und Desinfektionsmittel für die Lebensmittelindustrie und führt die gängigen Bestandteile derartiger Mittel auf.

In der US-A-4,215,005 werden Mittel zur Entfernung polymerer organischer Substanzen von aluminisierten anorganischen Substraten beschrieben. Bei den zu entfernenden polymeren organischen Substanzen handelt es sich um Photoresists, die beispielsweise aus Polyisopren, Polyvinylzimtsäure oder Phenolformaldehyd-Kondensaten bestehen. Die Mittel enthalten mindestens eine organische Sulfonsäure, mindestens ein organisches Lösungsmittel, einen Fluorwasserstoff-Komplex, einen stickstoffhaltigen Komplexbildner und gegebenenfalls Phenol. Als organische Sulfonsäuren kommen Verbindungen der allgemeinen Formel R - SO₃H in Frage, wobei R einen Alkylrest mit 1 bis 18 C-Atomen, einen Monohydroxyalkylrest, Arylrest, Monoalkylarylrest, Dialkylarylrest, Monohydroxyarylrest, Monoalkyl-hydroxyarylrest oder Monochlor-hydroxyarylrest bedeuten kann. Bevorzugt werden lineare Dodecylbenzolsulfonsäure, p-Toluolsulfonsäure, Phenolsulfonsäure oder Benzolsulfonsäure eingesetzt.

Demgegenüber liegt der vorliegenden Erfindung die Aufgabe zugrunde, ein verbessertes Reinigungs- und/oder Desinfektionsmittel zur Verfügung zu stellen, das möglichst stickstoff- und phosphorarm bzw. stickstoff- und phosphorfrei sein soll, um den Umweltanforderungen zu genügen und das insbesondere für die Entfernung von Verschmutzungen wie beispielsweise Kohlenhydrate, Eiweiß, Fette, anorganische Mineralbestandteile und sonstige Reste in der lebensmittelverarbeitenden Industrie geeignet ist. Gleichzeitig soll es bis in einen hohen Temperaturbereich von etwa 85°C zu keinen Korrosionserscheinungen an Chromnickelstählen, Aluminium und Kupferoberflächen führen.

Dementsprechend betrifft die vorliegende Erfindung die Verwendung von Alkansulfonsäuren mit 1 bis 4 C-Atomen oder deren Gemischen als Säuregrundlage von sauren Reinigungs- und/oder Desinfektionsmitteln zur Entfernung von Kohlenhydraten, Eiweiß, Fetten, anorganischen Mineralbestandteilen und sonstigen Resten von harten Oberflächen in der lebensmittelverarbeitenden Industrie.

Demgemäß wurde überraschenderweise gefunden, daß die Verwendung von bestimmten Alkansulfonsäuren in Reinigungs- und/oder Desinfektionsmitteln Vorteile bei der Entfernung der oben genannten Verschmutzungen aufweist.

Es wurde gefunden, daß kurzkettige, 1 bis 4 C-Atome aufweisende Alkansulfonsäuren neben einer guten Wirkung gegenüber organischen Verschmutzungen aufgrund der starken Acidität auch in der Lage sind, mineralische Verschmutzungen gut zu entfernen. Zudem konnte festgestellt werden, daß im Gegensatz zu der Verwendung von Schwefelsäure bei Chromnickelstählen selbst bis in den hohen Temperaturbereich, wie er in der Reinigungsmitteltechnologie vorkommt, es zu keinen Korrosionserscheinungen kommt.

Längerkettige Alkyl- oder Arylsulfonsäuren zeigen reinigungstechnisch zu geringe oder überhaupt keine Reinigungseffekte bzw. sind aufgrund ihres hohen Schaumvermögens nicht verwendbar.

Im Rahmen der vorliegenden Erfindung können kurzkettige, 1 bis 4 C-Atome aufweisende Alkansulfonsäuren verwendet werden. Unter Alkansulfonsäuren im Sinne der vorliegenden Erfindung sind somit Methansulfonsäure, Ethansulfonsäure, n- und i-Propansulfonsäure und n-, i- und tert.-Butansulfonsäure zu verstehen. Bevorzugt ist die Verwendung von Methansulfonsäure, Ethansulfonsäure, Propansülfonsäure und/oder Butansulfonsäure. Im Sinne der vorliegenden Erfindung kann entweder eine Alkansulfonsäure allein oder Gemische von Alkansulfonsäuren in Reinigungs- und/oder Desinfektionsmitteln verwendet werden.

Die erfindungsgemäßen Alkansulfonsäuren werden in Konzentrationen von 0,5 bis 100 %, vorzugsweise im Bereich von 5 bis 95 %, in den erfindungsgemäßen Reinigungs- und Desinfektionsmitteln verwendet.

In den Rahmen der vorliegenden Erfindung fallen demgemäß auch kurzkettige Alkansulfonsäuren enthaltende Reinigungs- und Desinfektionsmittel, die Stickstoff-frei (Nitrat) und Phosphor-frei (Phosphat) sind und die zudem gegenüber Chromnickelstahl nicht korrosiv sind. In dem Falle, daß der Phosphorgehalt nur eine nebengeordnete Rolle spielt, können die sauren Reinigungs- und Desinfektionsmittel neben den Alkansulfonsäuren auch Phosphorsäure bzw. Schwefelsäure und gegebenenfalls organische Säuren als gemischte Säuregrundlage enthalten. In diesem Falle können bevorzugterweise 30 bis 40 % Schwefelsäure und/oder 20 bis 30 % Phosphorsäure neben den Alkansulfonsäuren enthalten sein.

Neben den oben aufgeführten Säuren können die Alkansulfonsäuren aufweisenden Reinigungsmittel gegebenenfalls weitere schmutzaufschließende Komponenten, Komplexierungsmittel, oberflächenaktive Substanzen, Korrosionsschutzmittel, Antischaummittel und Duftstoffe enthalten, wie sie beispielsweise in Ullmanns Encyklopädie der technischen Chemie, 4. Auflage, Band 20, Seite 153 f, beschrieben sind.

Desinfektionsmittel im Sinne der vorliegenden Erfindung können beispielsweise Peroxyverbindungen, Jodophore, quartäre Ammoniumverbindungen, Ampholyte und Aldehyde enthalten, wie sie beispielsweise in Ullmanns loc. cit., Seite 155, beschrieben sind.

### Korrosionsverhalten der Alkansulfonsäuren

Es wurden 0,5 %ige Lösungen von Methan-, Propan-, Butan- und Octansulfonsäuren sowie Schwefelsäure in Wasser von 0 °d hergestellt und bei 75°C einem Korrosionstest gegenüber Chromnickelstahlplättchen (4401; 10 x 5 cm) nach DIN 50905 unterzogen. Nach einer Einwirkungszeit von 24 Stunden auf die Chromnickelstahlplättchen ergab sich ein Gewichtsabtrag von:

| | |
|---|---|
| Methansulfonsäure | 0,13 g/m² (0,0054 g/m².h) |
| Propansulfonsäure | 0,41 g/m² (0,017 g/m².h) |
| Butansulfonsäure | 0,44 g/m² (0,018 g/m².h) |
| Octansulfonsäure | 4,74 g/m² (0,20 g/m².h) |
| Schwefelsäure | 9,53 g/m² (0,40 g/m².h) |

Der Korrosionstest zeigt deutlich, daß unter den obigen Bedingungen Chromnickelstahl deutlich von Octansulfonsäure und Schwefelsäure angegriffen wird. Nach den Beständigkeitstabellen werden die Abträge der Methan-, Propan- und Butansulfonsäure als vollkommen beständig angesehen (Abtrag bis 0,03 g/m².h). Die Abtragswerte der Octansulfonsäure und der Schwefelsäure liegen bereits in einem Abtragbereich, der nicht mehr hingenommen werden kann, da die Aufrauhung der Oberfläche zu groß ist und die Reinigung erschwert wird. Zudem besteht die Gefahr von Pittings-Bildung, wenn die äußeren Einsatzbedingungen, wie beispielsweise ein hoher Chloridgehalt des Wassers, gegeben sind. Ferner liegt der Abtrag erheblich höher und erreicht den Bereich "weniger beständig" oder "nicht beständig", wenn die Temperatur der Reinigungs- und/ oder Desinfektionslösungen mehr als 75 °C beträgt, wie beispielsweise bei Ultra-Hochtemperaturverfahren bis 140 °C.

### Schaumverhalten

In einer Schaumschlagapparatur nach Götte (DIN 53 902, Teil 1) wurden Methan-, Ethan-, Propan-, Butan-, Hexan- und Octansulfonsäure in 0,5 %iger wäßriger Lösung von 0 °d bei 40°C auf ihr Schaumverhalten überprüft. Die Lösungen von Methan-, Ethan-, Propan- und Butansulfonsäure bildeten keinen Schaum.

Bei Hexansulfonsäure bildeten sich 10 ml, bei Octansulfonsäuren 250 ml stabiler Schaum, der nach 10 sec nicht zerfallen war.

### Beispiel 1

100 cm³-Glasflaschen wurden bis etwa zur Hälfte in Kondensmilch eingetaucht, die Milch abtropfen gelassen und anschließend 24 Stunden zur Antrocknung in einem Exsiccator bei 20 °C über Natriumsulfat belassen. Diese so präparierten Flaschen wurden mittels einer Tauchapparatur in die zu prüfende Lösung eingetaucht und wieder herausgeholt. Dieser Tauchvorgang wurde so lange wiederholt, bis die Verschmutzung von der Glasflasche entfernt war. Die Eintauchzeit dies jeweiligen Tauchvorganges betrug durchschnittlich 5 Sekunden.

Die 100 cm³-Flaschen wurden in eine wäßrige Lösung mit 0 °d von 0,5 % Methansulfonsäure bei 50°C eingetaucht. Nach 8 Tauchungen war die Verschmutzung von der Glasoberfläche entfernt.

### Vergleichsbeispiels 1

100 cm³-Glasflaschen, die gemäß Beispiel 1 präpariert worden waren, wurden gemäß Beispiel 1 in 0,5 %ige wäßrige, 0 °d Schwefelsäure getaucht. Diese Lösung zeigte überhaupt keinen Reinigungseffekt`

### Beipiel 2

Die gemäß Beispiel 1 präparierten Flaschen wurden einer bestimmten Anzahl von Tauchungen (30) untervorfen und der Reinigungseffekt danach visuell beurteilt. Nach diesem Verfahren wurde in einer Tauchapparatur mit 6 Tauchbädern eine Reinigungslösung bestehend aus
- 0,5 %: Ethansulfonsäure,
- 0,15 %: eines ethoxylierten (9 EO) Fettalkohols (C₁₀₋₁₈) als Entfettungskomponente und
- 0,1 %: eines Polyethylenglykolethers (Alkylrest mit 8 bis 18 C-Atomen, 9 EO-Gruppen mit endständigem Butlyverschluß) als Autischaümkomponente
- Rest: Wasser

verwendet. Nach 30 Tauchungen zeigte die Ethansulfonsäure-haltige Lösung einen einwandfreien Reinigungseffekt.

### Beispiel 3

Anstelle der in Beispiel 2 verwendeten Lösung wird eine entsprechende, 0,5 % Propansulfonsäure enthaltende Lösung für die Tauchvezsuche verwendet. Nach 30 Tauchungen zeigte die Propansulfonsäure enthaltende Lösung einen einwandfreien Reinigungseffekt.

### Beispiel 4

Anstelle der in Beispiel 2 verwendeten Lösung wird eine entsprechende, 0,5 % Butansulfonsäure enthaltende Lösung für die Tauchversuche verwendet Nach 30 Tauchungen zeigte die Butansulfonsäure enthaltende Lösung einen einwandfreien Reinigungseffekt.

### Vergleichsbeispiel 2

Anstelle der in Beispiel 2 verwendeten Lösung wurde eine entsprechende, 0,5 % Hexansulfonsäure enthaltende Lösung für die Tauchversuche verwendet. Nach 30 Tauchungen zeigte die Hexansulfsonsäure enthaltende Lösung praktisch keinen Reinigungseffekt.

### Vergleichsbeispiel 3

Anstelle der in Beispiel 2 verwendeten Lösung wurde eine entsprechende, 0,5 % Octansulfonsäure enthaltende Lösung für die Tauchversuche verwendet. Nach 30 Tauchungen zeigte die Octansulfonsäure enthaltende Lösung praktisch keinen Reinigungseffekt.

### Vergleichsbeispiel 4

Anstelle der in Beispiel 2 verwendeten Lösung wurde eine entsprechende, 0,5 % Schwefelsäure enthaltende Lösung für die Tauchversuche verwendet. Nach 30 Tauchungen zeigte die Schwefelsäure enthaltende Lösung praktisch keinen Reinigungseffekt.

### Beispiel 5

In einem Milcherhitzerkreislauf, bestehend aus Milch- und Rahmerhitzer, Zentrifuge, Milchtank und Rohrleitungssystem, wurde nach vorheriger alkalischer Reinigung die saure Phase, die bisher mit einem salpetersäurehaltigen Product in 2%iger Konzentration bei 80°C durchgeführt wurde, mit einer 1 %igen sauren Lösung, bestehend aus Propansulfonsäure gefahren. Der Reinigungseffekt (Beseitigung von Milchstein) war einwandfrei; es konnte auch nach längerer Zeit keine Korrosion auf den Chromnickelstahlplatten (4301) und an dem Dichtungsmaterial festgestellt werden.

### Beispiel 6

In Gärtanks wurde bisher bei 6°C und etwa 1 Stunde mit einem Produkt auf Phosphorsäurebasis in Kombination mit einem Ethoxylierungsprodukt einer C₁₂-C₁₄-Fettsäure sowie Antischaummittel mit zufriedenstellenden Ergebnissen gearbeitet. Die Reinigung der Behälter erfolgte über einen Spritzkopf von einem Ansatzbehälter aus, der für das Reinigungs- und/oder Desinfektionsmittel vorgesehen war. Anstelle des phosphorsauren Produkts wurde ein Gemisch, bestehend aus Butan- und Methansulfonsäure sowie den gleichen Ethoxylierungs- und Antischaummittel-Zusätzen, verwendet. Das Reinigungsergebnis war deutlich besser als bei dem oben beschriebenen Verfahren. Die Zeit konnte hier auf 45 Minuten reduziert werden.

## Patentansprüche

1. Verwendung von Alkansulfonsäuren mit 1 bis 4 C-Atomen oder deren Gemischen als Säuregrundlage von sauren Reinigungs- und/oder Desinfektionsmitteln zur Entfernung von Kohlenhydraten, Eiweiß, Fetten, anorganischen Mineralbestandteilen und sonstigen Resten von harten Oberflächen in der lebensmittelverarbeitenden Industrie.

2. Verwendung nach Anspruch 1, dadurch gekennzeichnet, daß das Reinigungs- und/oder Desinfektionsmittel 0,5 bis 100 %, vorzugsweise 5 bis 95 %, der Alkansulfonsäuren, bezogen auf die gesamte Formulierung, enthält.

3. Verwendung nach Ansprüchen 1 und 2, dadurch gekennzeichnet, daß das Reinigungs- und/oder Desinfektionsmittel neben Alkansulfonsäuren weitere anorganische und/oder organische Säuren enthält.

4. Verwendung nach Anspruch 3, dadurch gekennzeichnet, daß das Reinigungs- und/oder Desinfektionsmittel 30 bis 40 % Schwefelsäure und/oder 20 bis 30 % Phosphorsäure, bezogen auf die gesamte Formulierung, enthält.

## Claims

1. The use of alkane sulfonic acids containing 1 to 4 carbon atoms or mixtures thereof as the acid base of acidic cleaning preparations and/or disinfectants for removing carbohydrates, protein, fats, inorganic mineral constituents and other remains from hard surfaces in the food-processing industry.

2. The use claimed in claim 1, characterized in that the cleaning preparation and/or disinfectant contains 0.5 to 100% and preferably 5 to 95% of the alkane sulfonic acids, based on the formulation as a whole.

3. The use claimed in claims 1 and 2, characterized in that, in addition to alkane sulfonic acids, the cleaning preparation and/or disinfectant contains other inorganic and/or organic acids.

4. The use claimed in claim 3, characterized in that the cleaning preparation and/or disinfectant contains 30 to 40% sulfuric acid and/or 20 to 30% phosphoric acid, based on the formulation as a whole.

## Revendications

1. Utilisation d'acides alcanesulfoniques comportant 1 à 4 atomes de C ou de mélanges de ceux-ci, comme base acide de produits nettoyants et/ou désinfectants acides pour l'élimination des hydrates de carbone, protéines, graisses, constituants minéraux inorganiques et autres résidus, des surfaces dures dans l'industrie du traitement des denrées.

2. Utilisation selon la revendication 1, caractérisée en ce que le produit nettoyant et/ou désinfectant renferme 0,5 à 100 %, de préférence 5 à 95 %, des acides alcanesulfoniques, par rapport à la totalité de la formulation.

3. Utilisation selon les revendications 1 et 2, caractérisée en ce que le produit nettoyant et/ou désinfectant renferme, en plus des acides alcanesulfoniques, d'autres acides inorganiques et/ou organiques.

4. Utilisation selon la revendication 3, caractérisée en ce que le produit nettoyant et/ou désinfectant renferme 30 à 40 % d'acide sulfurique et/ou 20 à 30 % d'acide phosphorique, par rapport à la totalité de la formulation.
